# EUROPÄISCHE PATENTSCHRIFT

(11) **EP 1 287 716 B1**
(45) Veröffentlichungstag und Bekanntmachung des Hinweises auf die Patenterteilung: **10.11.2004**
(21) Anmeldenummer: 01929268.9
(22) Anmeldetag: 28.03.2001
(51) Int. Cl.: H04Q 7/38

(54) **VORRICHTUNG UND VERFAHREN FÜR EINEN WEITEREN VERBINDUNGSAUFBAU ZUR DATENÜBERTRAGUNG ÜBER EIN MOBILES TELEKOMMUNIKATIONSSYSTEM NACH BEENDIGUNG EINER ERSTEN VERBINDUNG**
DEVICE AND METHOD FOR SETTING UP A SUBSEQUENT CONNECTION FOR DATA TRANSMISSION VIA A MOBILE TELECOMMUNICATIONS SYSTEM, AFTER THE TERMINATION OF THE FIRST CONNECTION
DISPOSITIF ET PROCEDE D'ETABLISSEMENT DE COMMUNICATION ULTERIEUR POUR LA TRANSMISSION DE DONNEES PAR L'INTERMEDIAIRE D'UN SYSTEME DE TELECOMMUNICATION MOBILE APRES ACHEVEMENT D'UNE PREMIERE COMMUNICATION

(30) Priorität: 19.04.2000 DE 10019402
(43) Veröffentlichungstag der Anmeldung: 05.03.2003
(73) Patentinhaber: ROBERT BOSCH GMBH, 70442 Stuttgart (DE)
(72) Erfinder: HANS, Martin, 31139 Hildesheim (DE); KOWALEWSKI, Frank, 38228 Salzgitter (DE); LAUMEN, Josef, 31141 Hildesheim (DE); SCHMIDT, Gunnar, 38304 Wolfenbuettel (DE); BAER, Siegfried, 75179 Pforzheim (DE); BECKMANN, Mark, 38102 Braunschweig (DE)
(86) Internationale Anmeldenummer: PCT/DE2001/001179
(87) Internationale Veröffentlichungsnummer: WO 2001/080585

(56) Entgegenhaltungen:
- WO-A-99/21385
- DE-A- 19 939 571
- US-A- 5 428 823

## Beschreibung

### Stand der Technik

Die vorliegende Erfindung betrifft eine Vorrichtung und ein Verfahren für einen weiteren Verbindungsaufbau zur Datenübertragung zwischen einer zweiten Datenempfangseinrichtung und einer Datensendeeinrichtung über mindestens ein mobiles Telekommunikationssystem, wobei zwischen der Datensendeeinrichtung und der zweiten oder einer ersten Datenempfangseinrichtung bereits innerhalb eines bestimmten zurückliegenden Zeitraums eine erste Verbindungbeendet wurde.

Aus der DE 199 39 571 ist ein Ressourcenzuweisungsverfahren eines drahtlosen Kommunikationssystems bekannt, das eine Basisstation und ein Endgerät einschließt. Das Verfahren umfaßt die Schritte des periodischen Übertragens von Ressourceninformation, die durch die Basisstationen verwaltet wird, an die Endgeräte, das Empfangen und Speichern der periodisch übertragenen Ressourceninformation in den Endgeräten, das Durchführen einer Bestimmung in Erwiderung auf eine Ressourcenzuweisungsanforderung durch das Vergleichen des Parameterwertes, einer Ressource extrahiert aus der gespeicherten Ressourceninformation, mit einem voreingestellten kritischen Wert, wenn ein Endgerät einen Anwendungsbefehl empfängt, der der Ressourcenzuweisungsanforderung von einem Benutzer entspricht, und variables Anfordern einer Ressourcenzuweisung an die Basisstationen gemäß der Bestimmung der Endgeräte in Erwiderung auf die Ressourcenzuweisungsanforderung.

Obwohl auf beliebige mobile Datenübertragungsarten über beliebige Datenendgeräte anwendbar, werden die vorliegende Erfindung sowie die zugrundeliegende Problematik in bezug auf ein Telefonat mittels einem Mobiltelefon erläutert.

Für einen Verbindungsaufbau zur Datenübertragung zwischen zwei Datenendgeräten müssen der Datensende- sowie der Datenempfangseinrichtung bestimmte physikalische Ressourcen zugewiesen werden, die in dem mobilen Telekommunikationssystem über eine Luftschnittstellenverbindung zur Verfügung stehen. In der Regel findet diese Zuweisung in einer logischen Kontrollereinrichtung statt, welche in einem mobilen Telekommunikationssystem meist als RRC(Radio Resource Control)-Einrichtung bezeichnet wird. Diese Einrichtung verwaltet diese physikalischen Ressourcen eines Übertragungskanals des mobilen Telekommunikationssystems.

In Telekommunikationssystemen, die ein CDMA(Code Division Multiple Access)-Verfahren, das zum Kanalzugriff z.B. in zellularen Systemen für Mobilfunk genutzt werden kann, verwenden, z.B in einem UMTS(Universal Mobile Telecommunication System)-System, ist eine physikalische Ressource entweder als Kombination aus einem CDMA-Code und einer Trägerfrequenz des entsprechenden Übertragungskanals definiert, oder es wird zusätzlich eine dritte Komponente - die Zeit - hinzugefügt. Im erstgenannten Fall spricht man von einem FDD (Frequency Division Duplex)-Betrieb, im letzteren von einem TDD (Time Division Duplex)-Betrieb, d.h. hier definiert sich eine Radio-Ressource des Übertragungskanals des mobilen Telekommunikationssystems als Kombination aus einem CDMA-Code, einer Trägerfrequenz und einem Zeitschlitz (Time Slot).

Welche der noch zur Verfügung stehenden Ressourcen von der Kontrollereinrichtung welcher Datensendeeinrichtung, insbesondere einem Mobiltelefon, zugewiesen und wie diese Zuweisung ausgeführt wird, übermittelt die Kontrollereinrichtung mittels einer adäquaten Signalisierung an die Datensendeeinrichtung, von der die entsprechende Anfrage gekommen ist. Für beispielsweise UMTS-Systeme ist ein entsprechendes Protokoll für diese Signalisierung mit bestimmten Informationselementen definiert.

Außerdem sind in UMTS-Systemen mehrere Ebenen von Protokollen definiert, die jeweils von der Kontrollereinrichtung angesprochen werden.

Prinzipiell werden für jede mobile Datensende- und Datenempfangseinrichtung bzw. Mobilstation verschiedene logische Kanäle (Radio Bearer), das sind Kanäle innerhalb der entsprechenden Mobilstation mit entsprechender Datenkennung, vorteilhaft in den Ebenen 2 und 3 eines UMTS-Protokolls verarbeitet und als verschiedene Transportkanäle (Transport Channels) an die Ebene 1 des UMTS-Protokolls weitergegeben. Diese Ebene 1 bildet die Transportkanäle auf verschiedene physikalische Kanäle, das sind Kanäle mit z.B. unterschiedlicher Frequenz, Code- oder Zeitschlitzen oder irgendeine Kombination aus diesen dreien, ab. Diese physikalischen Kanäle stellen die Radio-Ressourcen dar. Die Ausführung der Abbildung in den einzelnen Ebenen wird eindeutig von der Kontrollereinrichtung im mobilen Telekommunikationsnetz bei einem Verbindungsaufbau festgelegt.

Somit muß bei jedem Verbindungsaufbau die Zuteilung der Radio-Ressourcen und die Abbildung von logischen Kanälen auf Transportkanäle auf physikalische Kanäle vollständig und eindeutig vom mobilen Telekommunikationssystem an die entsprechende mobile Datensendeeinrichtung übermittelt werden. Dazu ist das Signalisierungsprotokoll mit einer großen Anzahl an Siginalisierungs- bzw. Informationselementen gefüllt.

Jedoch kommt es häufig vor, daß beispielsweise ein Benutzer eines Mobiltelefons ein erstes Telefonat beendet und somit der erste Verbindungsaufbau zum Abschluß gebracht wird, um kurz darauf ein weiteres Telefonat zu starten, wofür er einen weiteren Verbindungsaufbau benötigt.

Für einen solchen weiteren Verbindungsaufbau hat sich beim Stand der Technik die Tatsache als nachteilig herausgestellt, daß beim zweiten, dritten,...Verbindungsaufbau für beispielsweise ein zweites, drittes,...Telefonat die soeben freigegebenen Ressourcen erneut benötigt werden und daher erneut komplett zugewiesen werden müssen.

Dasselbe gilt für die interne Konfiguration der entsprechenden mobilen Datensendeeinrichtung, da bei einer erneuten Zuweisung von Radio-Ressourcen ebenfalls eine neue interne Einstellung der entsprechenden mobilen Datensendeeinrichtung vorgenommen werden muß. Somit tritt über die Luftschnittstelle bei jedem erneuten Verbindungsaufbau bereits ein gewisser Datenverkehr auf, wodurch die Übertragungskapazität für die eigentlichen Übertragungsdaten bzw. User-Daten verringert wird.

Die der vorliegenden Erfindung zugrundeliegende Problematik besteht also allgemein darin, einen erneuten Verbindungsaufbau zur Datenübertragung schneller und mit einem geringeren Datenaufkommen an Signalisierungsinformationen zu liefern.

### VORTEILE DER ERFINDUNG

Das erfindungsgemäße Verfahren für einen weiteren Verbindungsaufbau mit den Merkmalen des Anspruchs 1 und die entsprechende Vorrichtung gemäß Anspruch 7 weisen gegenüber den bekannten Ansätzen den Vorteil auf, daß ein erneuter Verbindungsaufbaü wesentlich schneller vonstatten geht und die Übertragungskapazität der Luftschnittstelle für die eigentlichen Übertragungsdaten des Benutzers erhöht wird.

Die der vorliegenden Erfindung zugrundeliegende Idee besteht darin, daß die Datensendeeinrichtung mindestens eine Speichereinrichtung und das mobile Telekommunikationssystem mindestens eine Luftschnittstelle und eine Kontrollereinrichtung aufweisen und daß folgende Schritte durchgeführt werden:
Zuweisen von Ressourcen der Luftschnittstelle an die Datensendeeinrichtung und Erstellen einer bestimmten Konfiguration der Datensendeeinrichtung mittels der Kontrollereinrichtung beim ersten Verbindungsaufbau;
Speichern der Ressourcenbelegung und der Konfiguration der Datensendeeinrichtung des ersten Verbindungsaufbaus in der Speichereinrichtung der Datensendeeinrichtung; und
Senden einer Kennzeichnungsnachricht mittels einer Sendeeinrichtung des mobilen Telekommunikationssystems von der Kontrollereinrichtung an die Datensendeeinrichtung beim weiteren Verbindungsaufbau zum Abrufen der in der Speichereinrichtung gespeicherten Ressourcenbelegung und Konfiguration der Datensendeeinrichtung für eine erneute Zuweisung derselben beim weiteren Verbindungsaufbau.

Dadurch wird ermöglicht, daß bei einem weiteren Verbindungsaufbau die Datensendeeinrichtung bei einer "Neuwahl" exakt die gleichen Ressourcen erneut belegt und somit eine völlig neue Zuweisung dieser Ressourcen durch die Kontrollereinrichtung des Telekommunikationssystems nicht mehr notwendig ist, sondern lediglich eine Kennzeichnungsnachricht zum Abrufen der "alten" Ressourcen und Konfiguration erforderlich ist.

Da eine Kennzeichnungsnachricht eine wesentlich geringere Datenmenge als die ursprüngliche Ressourcenbelegungs- und die Konfigurationsnachricht für die Datensendeeinrichtung aufweist, kann die Signalisierung und damit der nicht "nutzbare" Datenverkehr auf der Luftschnittstelle verringert werden. Denn anstelle der mehrmaligen Signalisierung, welche Ressourcen für die Übertragung der jeweiligen Übertragungsdaten genutzt und welche Konfigurationen an der Datensendeeinrichtung eingestellt werden sollen, beschränkt sich die Signalisierung allein darauf, der Datensendeein-, richtung die Ressourcen mitzuteilen, welche für den vorherigen Verbindungsaufbau verwendet wurden und erneut in derselben Konfiguration zur Verfügung stehen.

In den Unteransprüchen finden sich vorteilhafte Weiterbildungen und Verbesserungen des in Anspruch 1 angegebenen Verfahrens und der in Anspruch 7 angegebenen Vorrichtung.

Gemäß einer bevorzugten Weiterbildung ist die Speichereinrichtung der Datensendeeinrichtung als temporäre Speichereinrichtung ausgebildet. Dadurch können die entsprechenden Ressourcen bzw. die entsprechende Konfiguration für einen vorbestimmten Zeitraum in der Datensendeeinrichtung abgespeichert werden, wobei aufgrund der lediglich temporären Abspeicherung eine geringerer Speichereinrichtung und somit ein geringerer Platzbedarf notwendig ist.

Gemäß einer weiteren bevorzugten Weiterbildung ist das mobile Telekommunikationssystem als UMTS-System ausgebildet.

Gemäß einer weiteren bevorzugten Weiterbildung ist die Datensendeeinrichtung als Mobiltelefon ausgebildet. Dieses stellt die häufigste Verwendungsform einer mobilen Datensendeeinrichtung dar, jedoch finden andere Datensendeeinrichtungen auch Verwendung.

Gemäß einer weiteren bevorzugten Weiterbildung sind die Ressourcen beispielsweise bei einem UMTS-System als Kombination aus einem CDMA-Code, einer Trägerfrequenz und evt. eines Zeitschlitzes eines entsprechenden Übertragungskanals definiert. Andere Definitionen der zuzuweisenden Ressourcen sind ebenso denkbar.

Gemäß einer weiteren bevorzugten Weiterbildung werden gerade freigewordene Ressourcen erst dann von der Kontrollereinrichtung zugewiesen, wenn keine anderen Ressourcen mehr zur Verfügung stehen. Das bedeutet, gerade freigewordene Ressourcen werden von der Kontrollereinrichtung möglichst lange nicht an andere Benutzer des mobilen Telekommunikationssystems vergeben, stattdessen werden zunächst die anderen freien Ressourcen auf dem Übertragungskanal zugewiesen. Somit kann bei Bedarf auf die für einen bestimmten Zeitraum zurückgehaltenen Ressourcen erneut zugegriffen werden.

Gemäß einer weiteren bevorzugten Weiterbildung werden erst die Ressourcen wieder von der Kontrollereinrichtung zugewiesen, deren Freigabe zeitlich länger zurückliegt. Diese Zuweisung der Ressourcen nach dem FIFO-Prinzip (first in, first out) stellt eine sinnvolle Strategie des Radio-Ressourcen-Managements dar.

Gemäß einer weiteren bevorzugten Weiterbildung wird eine von der Kontrollereinrichtung an die Datensendeeinrichtung gesendete Quittierungsnachricht von letzter für eine Bestätigung einer korrekten Ressourcenzuweisung quittiert. Somit wird eine fehlerhafte Ressourcenzuweisung erkannt und korrigiert und für einen fehlerfreien Verbindungsaufbau gesorgt.

Gemäß einer weiteren bevorzugten Weiterbildung wird der Zeitpunkt des Abrufens der in der Speichereinrichtung der Datensendeeinrichtung gespeicherten Ressourcenbelegung und Konfiguration der Datensendeeinrichtung für eine erneute Zuweisung derselben beim weiteren Verbindungsaufbau vorbestimmt. Insbesondere für paketvermittelte Dienste, bei denen die Daten paket- bzw. burstweise mit vorbestimmten Abständen zwischen den einzelnen Datenbursts übertragen werden, eignet sich die Angabe einer Aktivierungszeit.

### ZEICHNUNGEN

Ausführungsbeispiele der Erfindung sind in den Zeichnungen dargestellt und in der nachfolgenden Beschreibung näher erläutert.

Es zeigen:
- Fig. 1: ein Blockschaltbild einer Übertragungsarchitektur für einen Verbindungsaufbau über ein mobiles Telekommunikationssystem gemäß einem Ausführungsbeispiel der vorliegenden Erfindung;
- Fig. 2: ein Flußdiagramm eines Verfahrens für einen weiteren Verbindungsaufbau gemäß einem Ausführungsbeispiel der vorliegenden Erfindung; und
- Fig. 3: eine schematische Ansicht eines Quittierungsvorgangs der zugewiesenen Ressourcen gemäß einem Ausführungsbeispiel der vorliegenden Erfindung.

### BESCHREIBUNG DER AUSFÜHRUNGSBEISPIELE

In den Figuren bezeichnen gleiche Bezugszeichen gleiche oder funktionsgleiche Komponenten.

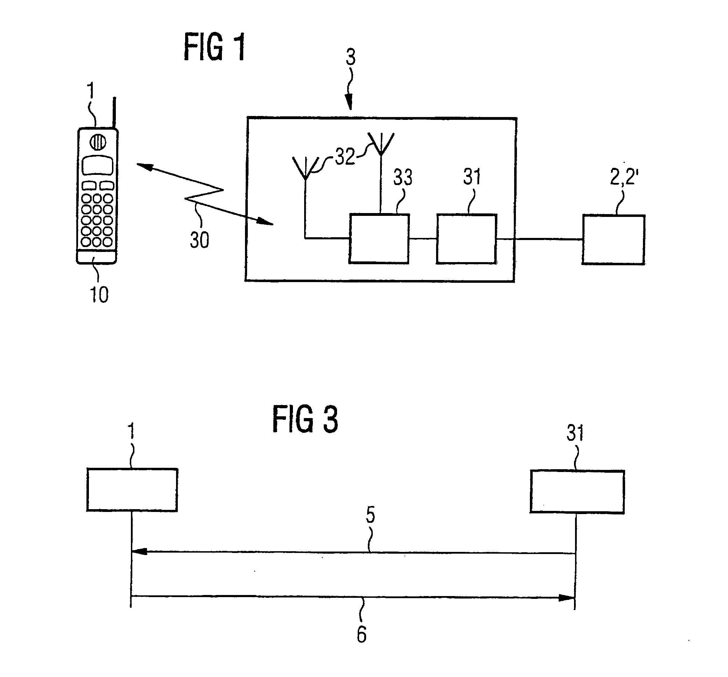

Fig. 1 illustriert ein Blockschaltbild einer Vorrichtung für einen weiteren Verbindungsaufbau zur Datenübertragung über ein mobiles Telekommunikationssystem 3 gemäß einem Ausführungsbeispiel der vorliegenden Erfindung. Das mobile Telekommunikationssystem 3 weist neben den üblichen Komponenten mindestens eine Kontrollereinrichtung, eine sogenannte RRC(Radio Ressource Control)-Einrichtung 31 und eine Sendeeinrichtung 33 auf. Mittels der Sendeeinrichtung sind sowohl verbindungs- als auch paketorientierte Daten von einer Basisstation 32 des Telekommunikationssystems 3 über eine Luftschnittstelle 30 an beispielsweise ein Mobiltelefon 1 für einen Verbindungsaufbau übertragbar.

Ein Datensatz durchläuft bestimmte Protokollstrukturen. Dadurch wird ein Verbindungsaufbau für eine Datenübertragung zwischen dem Mobiltelefon 1, welches eine temporäre Speichereinrichtung 10 aufweist, und einer Datenempfangseinrichtung 2; 2', beispielsweise bei einem Telefonat ein weiteres Mobiltelefon, über das mobile Telekommunikationssystem 3 hergestellt. Vorzugsweise ist das mobile Telekommunikationssystem 3 als UMTS-System ausgebildet.

Bei diesem UMTS-System sind wie vorher bereits erwähnt die physikalischen Ressourcen als Kombination aus einem CDMA-Code und einer Trägerfrequenz des Übertragungskanals oder zusätzlich aus der Zeit definiert. Im Betrieb ist demnach eine Radio-Ressource eines Funkkanals als Kombination aus einem CDMA-Code, einer Trägerfrequenz und evt. einem Zeitschlitz ausgebildet.

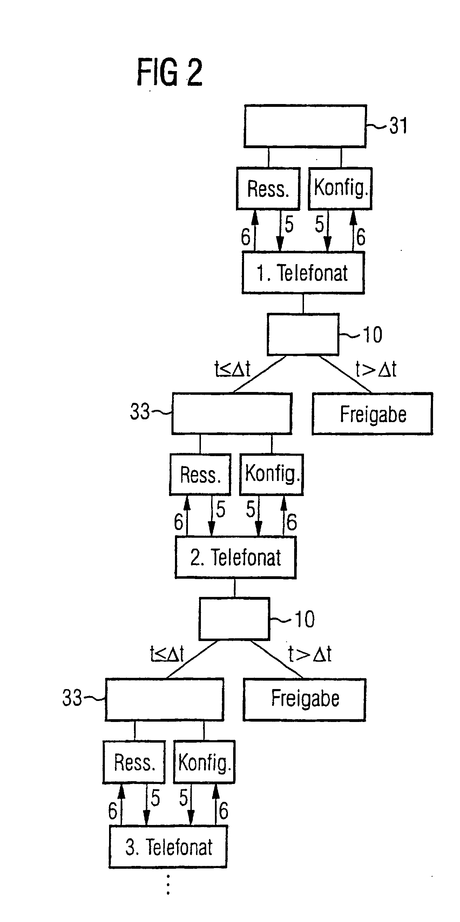

Fig. 2 zeigt ein Flußdiagramm eines Verfahrens für aufeinanderfolgende Verbindungsaufbauvorgänge, wobei nach Beendigung eines ersten Verbindungsaufbaus beispielhaft zwischen dem Mobiltelefon 1 und einem ersten Mobiltelefon 2 als Datenempfangseinrichtung weitere Verbindungen zwischen dem Mobiltelefon 1 und ebenfalls der ersten Datenempfangseinrichtung 2 oder einer beliebigen zweiten Datenempfangseinrichtung 2' aufgebaut werden.

Will ein Mobilfunknutzer nach einem vorbestimmten Zeitraum Δt einer Nichtbenutzung des Mobiltelefons 1 ein Telefonat führen, so werden dem Mobiltelefon 1 des Benutzers zu Beginn des Verbindungsaufbaus, der hier als erstmaliger Verbindungsaufbau angesehen wird, bestimmte physikalische Ressourcen der Luftschnittstelle 30 des mobilen Telekommunikationssystems 3 durch die RRC-Einrichtung 31 zugewiesen. Vor dem eigentlichen ersten Anruf wird von der RRC-Einrichtung 31 an das Mobiltelefon 1 eine Signalisierung durch die Sendeeinrichtung 33 gesendet, welche noch zur Verfügung stehenden Ressourcen für die Übertragung der entsprechenden Daten genutzt, in welcher Art und Weise die entsprechenden Daten empfangen bzw. gesendet und weiter verarbeitet werden sollen und welche interne Konfiguration des Mobiltelefons 1 dafür eingestellt werden soll. Es müssen bestimmte Prozeßeinheiten aufgerufen werden, welche die Einstellungen bzw. Konfigurationen des Mobiltelefons 1 tätigen.

In Fig. 3 ist das Prinzip der Quittierung eines fehlerfreien Empfangs der Ressourcenzuteilung und der Konfigurationseinstellung schematisch dargestellt.

Zur Durchführung einer fehlerfreien Zuweisung der Radio-Ressourcen und der entsprechenden Konfigurationen wird von der RRC-Einrichtung 31 über die Sendeeinrichtung 33 eine Quittierungsnachricht 5 an das Mobiltelefon 1 gesendet. Bei korrektem Empfang der Radio-Ressourcen-Zuteilung und der Konfigurationseinstellung sendet das Mobiltelefon 1 eine Re-Quittierungsnachricht 6 an die RRC-Einrichtung 31 für eine Quittierung zurück. Bei Nichterhalt einer Re-Quittierungsnachricht 6 innerhalb eines vorbestimmten Zeitraums oder bei einer Fehlermeldung wird der Vorgang der Zuteilung der Radio-Ressourcen und der Konfigurationseinstellung und das Senden einer Quittierungsnachricht 5 so oft wiederholt, bis eine Re-Quittierungsnachricht 6 den Empfang der erforderten Daten für einen fehlerfreien Verbindungsaufbau bestätigt.

Nach Beendigung des ersten Telefonats wird die dafür eingestellte Konfiguration und die zugewiesenen Ressourcen in einer temporären Speichereinrichtung 10 des Mobiltelefons 1 für einen vorbestimmten Zeitraum Δt abgespeichert. Dieser Erinnerungszeitraum Δt ist vorteilhaft so zu wählen, daß er größer oder gleich dem Zeitraum ist, in dem alle restlichen Ressourcen der Luftschnittstelle 30 des mobilen Telekommunikationssystems 3 ebenfalls Datensendeeinrichtungen zugewiesen werden. Dann nämlich können die für das erste Telefonat des Mobiltelefons 1 verwendeten Ressourcen nicht länger zurückgehalten werden und werden für eine anderweitige Vergabe freigegeben.

Nach einer Freigabe der beim ersten Telefonat zugewiesenen Ressourcen ist eine Abspeicherung in der temporären Speichereinrichtung 10 des Mobiltelefons 1 nicht weiter erforderlich.

Startet der Mobilfunkbenutzer des Mobiltelefons 1 nach Beendigung des ersten Telefonats innerhalb des Zeitraums Δt ein weiteres Telefonat, so benötigt er erneut die gleiche Qualität der Radio-Ressource, d.h. die gleiche Qualität bei der Übertragung bzw. der Sprachverbindung. Er benötigt genau die gleichen Ressourcen noch einmal, welche er soeben mit Beendigung des ersten Telefonats wieder freigegeben hat.

Da bei einem erneuten Verbindungsaufbau innerhalb des Zeitraums Δt die vorher zugewiesenen Ressourcen und Konfigurationseinstellungen noch in der temporären Speichereinrichtung 10 des Mobiltelefons 1 abgespeichert sind, wird nun lediglich eine Kennzeichnungsnachricht von der RRC-Einrichtung 31 durch die Sendeeinrichtung 33 an das Mobiltelefon 1 gesendet und die in der Speichereinrichtung 10 gespeicherte Ressourcenbelegung und Konfiguration des Mobiltelefons 1 für eine erneute Zuweisung derselben für den zweiten Verbindungsaufbau abgerufen. Solange also zwischen dem "Auflegen" und einer "Neuwahl" die vorher belegte Ressource nicht vom Mobilfunknetz an einen anderen Mobilfunknutzer vergeben worden ist, kann das Mobiltelefon 1 bei der "Neuwahl" exakt die gleichen Ressourcen, d.h. Frequenz, Code und evt. Zeitschlitz, wieder belegen. Damit entfällt eine völlig neue Zuweisung der Ressourcen durch die RRC-Einrichtung 31.

Die notwendigen Elemente einer Kennzeichnungsnachricht sind gegenüber den notwendigen Elementen der Signalisierungsnachricht, welche Ressourcen genutzt werden sollen, erheblich reduziert, so daß beim erneuten Verbindungsaufbau weniger Signalisierungsdaten auf der Luftschnittstelle 30 auftreten.

Analog zum ersten Verbindungsaufbau wird zusammen mit der Kennzeichnungsnachricht eine Quittierungsnachricht 5 von der RRC-Einrichtung 31 an das Mobiltelefon 1 gesendet und der Empfang der Kennzeichnungsnachricht im fehlerfreien Falle durch eine Re-Quittierungsnachricht 6 an die RRC-Einrichtung 31 bestätigt.

Analog zum ersten Verbindungsaufbau werden die ursprünglichen, für den zweiten Verbindungsaufbau abgerufenen Ressourcen und die Konfigurationseinstellung erneut in der temporären Speichereinrichtung 10 des Mobiltelefons 1 temporär abgespeichert. Die bereits erwähnten Schritte werden erneut ausgeführt und es wird analog verfahren.

Diese Vorgehensweise ist beliebig wiederholbar, beispielsweise für ein drittes Telefonat mit einem dritten Gesprächspartner.

Dabei empfiehlt es sich für das mobile Telekommunikationssystem 3 nach dem sogenannten FIFO-Prinzip (first in, first out) vorzugehen. Bei diesem Prinzip werden Ressourcen, deren Freigabe zeitlich länger zurückliegt als die Freigabe anderer Ressourcen, zuerst wieder vergeben, bevor die Ressourcen erneut verteilt werden, deren Freigabe zeitlich kürzer zurückliegt. Somit werden im vorliegenden Ausführungsbeispiel die dem Mobiltelefon 1 beispielsweise für das erste Telefonat zugewiesenen Ressourcen und Konfigurationen des Mobiltelefons 1 nach Beendigung der ersten Verbindung erst dann an einen anderen Mobilfunknutzer vergeben, wenn keine länger freiliegenden Ressourcen mehr zur Verfügung stehen.

Die wesentlichen Vorteile der vorliegenden Erfindung liegen in der Ersparnis von Signalisierungsinformationen, welche beim weiteren Verbindungsaufbau vom Telekommunikationssystem an das Mobiltelefon übertragen werden müssen. Anstelle der kompletten Signalisierung, welche Ressourcen bei einem weiteren Verbindungsaufbau genutzt werden sollen, beschränkt sich die Signalisierung der Kennzeichnungsnachricht auf die Mitteilung, daß dieselbe "alte" Konfiguration und dieselben "alten" Ressourcen erneut verwendet werden sollen.

Die Ersparnis der Signalisierung hat zwei positive Effekte.

Zum einen kann ein derartiger erneuter Verbindungsaufb au wesentlich schneller vonstatten gehen als bei einer wiederholten Mitteilung.der vollständigen Konfiguration. Nach dem Stand der Technik beträgt die Dauer eines weiteren Verbindungsaufbaus bei einem GSM-System aufgrund der notwendigen kompletten Signalisierung ungefähr 10-20 Sekunden. Beim Abruf der gespeicherten Ressourcen und der Konfiguration durch die Kennzeichnungsnachricht erfolgt ein weiterer Verbindungsaufbau ca. in einem Bruchteil einer Sekunde.

Zum anderen bedeutet weniger Signalisierung einen geringeren Datenverkehr auf der Luftschnittstelle, d.h. die Übertragungskapazität der Luftschnittstelle für die eigentlichen User-Daten wird erhöht.

Obwohl die vorliegende Erfindung anhand eines bevorzugten Ausführungsbeispiels vorstehend beschrieben wurde, ist sie darauf nicht beschränkt, sondern auf vielfältige Weise modifizierbar.

Das oben beschriebene Verfahren eignet sich beispielsweise auch hervorragend für paketvermittelte Dienste, da im allgemeinen die Daten bei diesen paketweise zur Übertragung vorliegen. Anstelle der mehrmaligen Signalisierung, welche Ressourcen für die Übertragung des jeweiligen Datenpakets genutzt werden sollen, kann sich die Signalisierung nun darauf beschränken, dem Mobiltelefon 1 mitzuteilen, daß die für das vorherige Datenpaket bereits benutzten Ressourcen immer noch zur Verfügung stehen und in derselben Konfiguration verwendbar sind. Durch eine Kennzeichnungsnachricht, die lediglich einen geringen Bereich der Übertragungskapazität der Luftschnittstelle 30 aufgrund weniger notwendiger Informationselemente einnimmt werden diese reaktiviert.

Bei paketorientierter Datenübertragung wird vorteilhaft ein Zeitpunkt der Reaktivierung der "alten" Konfiguration und Resspurcenbelegung angegeben. Dadurch wird eine schnelle und fehlerfreie paketorientierte Datenübertragung gewährleistet.

## Patentansprüche

1. Verfahren für einen weiteren Verbindungsaufbau zwischen einer zweiten Empfangseinrichtung (2') und einer Sendeeinrichtung (1) über mindestens ein mobiles Telekommunikationssystem (3), wobei zwischen der Sendeeinrichtung (1) und der zweiten (2') oder einer ersten Empfangseinrichtung (2) bereits innerhalb eines bestimmten zurückliegenden Zeitraums Δt eine erste Verbindung beendet wurde, und wobei die Sendeeinrichtung (1) mindestens eine Speichereinrichtung (10) und das mobile Telekommunikationssystem (3) mindestens eine Luftschnittstelle (30) und eine Kontrollereinrichtung (31) aufweisen, mit folgenden Schritten:
Zuweisen von Ressourcen der Luftschnittstelle (30) an die Sendeeinrichtung (1) und Erstellen einer bestimmten Konfiguration der Sendeeinrichtung (1) mittels der Kontrollereinrichtung (31) beim ersten Verbindungsaufbau;
Speichern der Ressourcenbelegung und der Konfiguration der Sendeeinrichtung (1) des ersten Verbindungsaufbaus in der Speichereinrichtung (10) der Sendeeinrichtung (1); und
Senden einer Kennzeichnungsnachricht von der Kontrollereinrichtung (31) an die Sendeeinrichtung (f1) beim weiteren' Verbindungsaufbau zum Abrufen der in der Speichereinrichtung (10) gespeicherten Ressourcenbelegung und Konfiguration der Sendeeinrichtung (1) für eine erneute Zuweisung derselben beim weiteren Verbindungsaufbau.

2. Verfahren nach Anspruch 1, **dadurch gekennzeichnet, dass** die in der Speichereinrichtung (10) der Sendeeinrichtung (1) gespeicherten Ressourcenbelegung und Konfiguration der Sendeeinrichtung (1) temporär abgespeichert werden.

3. Verfahren nach einem der Ansprüche 1 oder 2, **dadurch gekennzeichnet, dass** gerade freigewordene Ressourcen erst dann von der Kontrollereinrichtung (31) zugewiesen werden, wenn keine andere Ressourcen mehr zur Verfügung stehen.

4. Verfahren nach einem der vorangehenden Ansprüche, **dadurch gekennzeichnet, dass** zuerst die Ressourcen wieder von der Kontrallereinrichtung (31) zugewiesen werden, deren Freigabe zeitlich länger zurückliegt.

5. Verfahren nach einem der vorangehenden Ansprüche, **dadurch gekennzeichnet, dass** eine von der Kontrollereinrichtung (31) an die Sendeeinrichtung (1) gesendete Quittierungsnachricht (5) von letzterer für eine Bestätigung einer korrekten Ressourcenzuweisung quittiert wird.

6. Verfahren nach einem der vorangehenden Ansprüche, **dadurch gekennzeichnet, dass** der Zeitpunkt des Abrufens der in der Speichereinrichtung (10) der Sendeeinrichtung (1) gespeicherten Ressourcenbelegung und Konfiguration der Sendeeinrichtung (1) für eine erneute Zuweisung derselben beim weiteren Verbindungsaufbau vorbestimmt wird.

7. Vorrichtung für einen weiteren Verbindungsaufbau zwischen einer zweiten Empfangseinrichtung (2') und einer Sendeeinrichtung (1) über mindestens ein mobiles Telekommunikationssystem (3), wobei zwischen der Sendeeinrichtung (1) und der zweiten (2') oder einer ersten Empfangseinrichtung (2) bereits innerhalb eines bestimmten zurückliegenden Zeitraums Δt eine erste Verbindung beendet wurde,
wobei das mobile Telekommunikationssystem (3) mindestens eine Kontrollereinrichtung (31) zum Zuweisen von Ressourcen einer Luftschnittstelle (30) an die Sendeeinrichtung (1) und zum Erstellen einer bestimmten Konfiguration der Sendeeinrichtung (1) beim ersten Verbindungsaufbau aufweist;
wobei die Sendeeinrichtung (1) mindestens eine Speichereinrichtung (10) zum Speichern der Ressourcenbelegung und der Konfiguration der Sendeeinrichtung (1) des ersten Verbindungsaufbaus aufweist; und
wobei das mobile Telekommunikationssystem (3) eine Sende einrichtung (33) zum senden einer Kennzeichnungsnachricht von der Kontrollereinrichtung (31) an die Sendeeinrichtung (1) beim weiteren Verbindungsaufbau zum Abrufen der in der Speichereinrichtung (10) gespeicherten Ressourcenbelegung und - Konfiguration der Sendeeinrichtung (1) für eine erneute Zuweisung derselben beim weiteren Verbindungsaufbau.

8. Vorrichtung nach Anspruch 7, **dadurch gekennzeichnet, dass** die Speichereinrichtung (10) der Sendeeinrichtung (1) als temporäre Speichereinrichtung (10) ausgebildet ist.

9. Vorrichtung nach einem der Ansprüche 7 oder 8, **dadurch gekennzeichnet, dass** das mobile Telekommunikationssystem (3) als UMTS Universal Mobile Telecommunication System -System ausgebildet ist.

10. Vorrichtung nach einem der Ansprüche 7 bis 9, **dadurch gekennzeichnet**, däss die Sendeeinrichtung (1) als Mobiltelefon (1) ausgebildet ist.

11. Vorrichtung nach einem der Ansprüche 7 bis 10, **dadurch gekennzeichnet, dass** die Ressourcen beispielsweise bei einem UMTS Universal Mobile Telecommunication System -System als Kombination aus einem CDMA Code Division Multiple Access -Code, einer Trägerfrequenz und eines Zeitschlitzes eines entsprechenden Übertragungskanals definiert sind.

## Claims

1. Method for setting up further connections between a second reception device (2') and a transmission device (1) using at least one mobile telecommunication system (3), where a first connection has already been ended between the transmission device (1) and the second (2') or a first reception device (2) within a particular past period Δt, and where the transmission device (1) has at least one memory device (10) and the mobile telecommunication system (3) has at least one air interface (30) and a controller device (31), having the following steps:
resources of the air interface (30) are allocated to the transmission device (1), and a particular configuration for the transmission device (1) is created using the controller device (31) when a connection is first set up;
the resource allocation and the configuration of the transmission device (1) when a connection is first set up are stored in the memory device (10) in the transmission device (1); and
an identification message is sent from the controller device (31) to the transmission device (fl) when further connections are set up in order to retrieve the resource allocation and configuration of the transmission device (1) which are stored in the memory device (10) for the purpose of reallocating them when further connections are set up.

2. Method according to Claim 1, **characterized in that** the resource allocation and configuration of the transmission device (1) which are stored in the memory device (10) in the transmission device (1) are stored on a temporary basis.

3. Method according to either of Claims 1 and 2, **characterized in that** resources which have just been released are not allocated by the controller device (31) until no other resources are available.

4. Method according to one of the preceding claims, **characterized in that** the controller device (31) first reallocates the resources which were released further ago in the past.

5. Method according to one of the preceding claims, **characterized in that** an acknowledgement message (5) sent from the controller device (31) to the transmission device (1) is acknowledged by the transmission device (1) in order to confirm correct resource allocation.

6. Method according to one of the preceding claims, **characterized in that** the time of retrieval of the resource allocation and configuration of the transmission device (1) which are stored in the memory device (10) in the transmission device (1) is predetermined for the purpose of reallocating them when further connections are set up.

7. Apparatus for setting up further connections between a second reception device (2') and a transmission device (1) using at least one mobile telecommunication system (3), where a first connection has already been ended between the transmission device (1) and the second (2') or a first reception device (2) within a particular past period Δt,
where the mobile telecommunication system (3) has at least one controller device (31) for allocating resources of an air interface (30) to the transmission device (1) and for creating a particular configuration for the transmission device (1) when a connection is first set up;
where the transmission device (1) has at least one memory device (10) for storing the resource allocation and the configuration of the transmission device (1) when a connection is first set up; and
where the mobile telecommunication system (3) has a transmission device (33) for sending an identification message from the controller device (31) to the transmission device (1) when further connections are set up in order to retrieve the resource allocation and configuration of the transmission device (1) which are stored in the memory device (10) for the purpose of reallocating them when further connections are set up.

8. Apparatus according to Claim 7, **characterized in that** the memory device (10) in the transmission device (1) is in the form of a temporary memory device (10).

9. Apparatus according to either of Claims 7 and 8, **characterized in that** the mobile telecommunication system (3) is in the form of a UMTS Universal Mobile Telecommunication System system.

10. Apparatus according to one of Claims 7 to 9, **characterized in that** the transmission device (1) is in the form of a mobile telephone (1).

11. Apparatus according to one of Claims 7 to 10, **characterized in that** the resources are defined, for example in a UMTS Universal Mobile Telecommunication System system, as a combination of a CDMA Code Division Multiple Access code, a carrier frequency and a timeslot on a corresponding transmission channel.

## Revendications

1. Procédé pour un établissement de communication ultérieure entre un deuxième dispositif de réception (2') et un dispositif d'émission (1) par l'intermédiaire d'au moins un système de télécommunication mobile (3), selon lequel on a terminé déjà à l'intérieur d'une période de temps (Δt) précédente déterminée une première communication entre le dispositif d'émission (1) et le deuxième dispositif de réception (2') ou un premier dispositif de réception (2), le dispositif d'émission (1) présentant au moins un dispositif de mémoire (10) alors que le système de communication mobile (3) présente au moins une interface aérienne (30) et un dispositif contrôleur (31),
**caractérisé par**
les étapes suivantes :
- affectation de ressources de l'interface aérienne (30) au dispositif d'émission (1) et réalisation d'une configuration déterminée du dispositif d'émission (1) au moyen du dispositif contrôleur (31) lors du premier établissement de communication ;
- mémorisation des ressources reçues et de la configuration du dispositif d'émission (1) du premier établissement de communication dans le dispositif de mémoire (10) du dispositif d'émission (1) ;
- envoi d'un message d'identification depuis le dispositif contrôleur (31) au dispositif d'émission (1) lors de l'établissement de communication ultérieure pour demander les ressources stockées dans le dispositif de mémoire (10) et la configuration du dispositif d'émission (1) pour une nouvelle affectation de celles-ci lors de l'établissement de communication ultérieure.

2. Procédé selon la revendication 1,
**caractérisé en ce que**
les ressources stockées dans le dispositif de mémoire (10) du dispositif d'émission (1) et la configuration du dispositif d'émission (1) sont temporairement mémorisées.

3. Procédé selon l'une quelconque des revendications 1 ou 2,
**caractérisé en ce que**
des ressources qui viennent d'être libérées ne sont affectées par le dispositif contrôleur (31) que si aucune autre ressource n'est plus disponible.

4. Procédé selon l'une quelconque des revendications précédentes,
**caractérisé en ce que**
d'abord celles des ressources sont réaffectées par le dispositif contrôleur (31) dont la libération se situe le plus loin dans le temps.

5. Procédé selon l'une quelconque des revendications précédentes,
**caractérisé en ce qu'**
un message d'acquittement (5) envoyé par le dispositif contrôleur (31) au dispositif d'émission (1) est acquitté par ce dernier pour confirmer une affectation de ressources correcte.

6. Procédé selon l'une quelconque des revendications précédentes,
**caractérisé en ce que**
le moment de la demande des ressources stockées dans le dispositif de mémoire (10) du dispositif d'émission (1) et de la configuration du dispositif d'émission (1) est prédéterminé pour une nouvelle affectation de celles-ci lors de l'établissement de communication ultérieure.

7. Dispositif pour un établissement de communication ultérieure entre un deuxième dispositif de réception (2') et un dispositif d'émission (1) par l'intermédiaire d'au moins un système de télécommunication mobile (3), dans lequel déjà à l'intérieur d'une période de temps (Δt) précédente déterminée une première communication entre le dispositif d'émission (1) et le deuxième dispositif de réception (2') ou un premier dispositif de réception (2) a été terminée,
**caractérisé en ce que**
- le système de télécommunication mobile (3) présente au moins un dispositif contrôleur (31) pour affecter des ressources d'une interface aérienne (30) au dispositif d'émission (1) et pour réaliser une configuration déterminée du dispositif d'émission (1) lors du premier établissement de communication ;
- le dispositif d'émission (1) présente au moins un dispositif de mémoire (10) pour mémoriser les ressources reçues et la configuration du dispositif d'émission (1) du premier établissement de communication ; et
- le système de télécommunication mobile (3) présente un dispositif d'émission (33) pour envoyer un message d'identification depuis le dispositif contrôleur (31) au dispositif d'émission (1) lors de l'établissement de communication ultérieure pour demander les ressources stockées dans le dispositif de mémoire (10) et la configuration du dispositif d'émission (1), pour une nouvelle affectation de celles-ci lors de l'établissement de communication ultérieure.

8. Dispositif selon la revendication 7,
**caractérisé en ce que**
le dispositif de mémoire (10) du dispositif d'émission (1) présente la forme d'un dispositif de mémoire (10) temporaire.

9. Dispositif selon l'une quelconque des revendications 7 ou 8,
**caractérisé en ce que**
le système de télécommunication mobile (3) présente la forme d'un système UMTS - Universal Mobile Telecommunication System.

10. Dispositif selon l'une quelconque des revendications 7 à 9,
**caractérisé en ce que**
le dispositif d'émission (1) présente la forme d'un téléphone mobile (1).

11. Dispositif selon l'une quelconque des revendications 7 à 10,
**caractérisé en ce que**
les ressources, par exemple pour un système UMTS - Universal Mobile Telecommunication System - sont définies sous la forme d'une combinaison d'un code CDMA - Code Division Multiple Access -, d'une fréquence porteuse et d'un créneau de temps d'un canal de transmission correspondant.
